# FASCICULE DE BREVET EUROPEEN

(11) **EP 1 236 943 B1**
(45) Date de publication et mention de la délivrance du brevet: **04.05.2005**
(21) Numéro de dépôt: 02290473.4
(22) Date de dépôt: 27.02.2002
(51) Int. Cl.: F16L 5/10, F16L 5/14

(54) **Bague de traversée de cloison**
Manschette für Wanddurchführung
Sleeve for a wall opening

(30) Priorité: 01.03.2001 FR 0102828
(43) Date de publication de la demande: 04.09.2002
(73) Titulaire: Valeo Electronique et Systèmes de Liaison, 78180 Montigny le Bretonneux (FR)
(72) Inventeur: Chretien, Louis, 92500 Rueil Malmaison (FR)
(74) Mandataire: Faber, Jean-Paul

(56) Documents cités:
- EP-A- 0 967 425
- DE-B- 1 166 567
- US-A- 2 517 717

## Description

La présente invention se rapporte à une bague de traversée de cloison destinée à être montée dans un trou d'une cloison séparant le compartiment moteur de l'habitacle d'un véhicule.

De telles bagues sont utilisées pour le guidage d'un faisceau de conducteurs s'étendant depuis la source de courant électrique vers les différents dispositifs électriques à alimenter à l'intérieur de l'habitacle.

De telles bagues doivent protéger le faisceau et assurer l'étanchéité entre le compartiment moteur et l'habitacle.

On connaît un grand nombre de bagues de traversée de parois, mais elles sont généralement complexes, chères et leur pose est souvent délicate.

L'invention a pour but de réaliser une bague d'une conception simple, peu onéreuse et d'une pose rapide et simple.

La bague, selon l'invention, est destinée à être montée dans le trou d'une cloison séparant le compartiment moteur de l'habitacle d'un véhicule et constituée d'un corps souple et élastique présentant une gorge périphérique correspondant au diamètre du trou de la cloison et délimitant deux languettes circulaires destinées à coopérer avec les deux faces de ladite cloison, ledit corps étant percé d'un canal central traversé par un faisceau de conducteurs, ladite bague étant caractérisée en ce que le canal comporte une série de sections de différents diamètres et le faisceau est noyé dans de la matière plastique remplissant le canal.

Grâce à cette disposition, le faisceau de conducteurs est parfaitement protégé et étant solidarisé avec la bague, on est assuré de l'étanchéité, la mise en place dans le trou de la cloison étant très simple puisqu'il suffit de replier l'une des languettes circulaires pour l'engager dans ledit trou.

De préférence, la bague est complétée d'un anneau monté sur le bord du trou de la cloison et constitue un élément de bridage de l'ensemble sur la cloison.

Enfin, on peut prévoir une épaisseur de matière isolante percée d'une ouverture correspondant au trou et appliquée contre la face de la cloison tournée du côté du moteur, ladite ouverture étant traversée par la bague 1 dont la languette circulaire correspondante 3 est appliquée contre la face libre de ladite épaisseur de matière isolante 17.

L'invention va maintenant être décrite avec plus de détails en se référant à un mode de réalisation particulier donné à titre d'exemple seulement et représenté aux dessins annexés, dans lesquels :
Figure 1 est une vue en coupe d'une bague, selon l'invention.
Figure 2 montre en coupe la bague garnie d'un faisceau de conducteurs.
Figure 3 montre le montage de la bague sur une cloison séparant l'habitable du compartiment moteur.
Figure 4 montre en coupe la bague montée sur la cloison.

La bague, selon l'invention, comprend un corps 1 réalisé en une matière souple et élastique, ledit corps présentant une gorge périphérique 2 délimitant deux languettes circulaires 3 et 4.

Le corps 1, dans sa partie centrale, est percé d'un canal 5 présentant des sections circulaires 5a, 5b, 5c, 5d, 5e, 5f et 5g, les sections 5a, 5d et 5g ayant le même diamètre, tandis que les sections 5b et 5f ont un diamètre légèrement supérieur et les sections 5c et 5e ont un diamètre supérieur à celui des sections 5b et 5f.

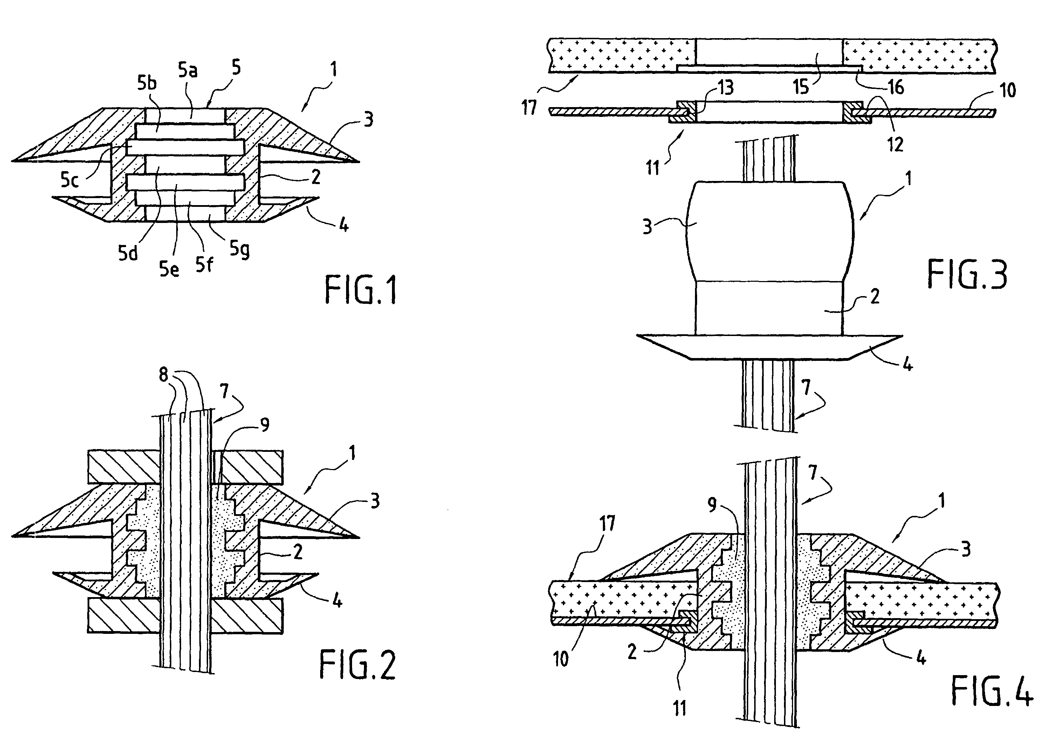

Comme on le voit à la figure 2, le câblage désigné par la référence 7 et formé d'une série de conducteurs devant passer du compartiment moteur à l'habitacle, traverse le canal 5 ; dans celui-ci est injectée de la matière plastique 9, celle-ci faisant corps avec les différentes sections 5a à 5g. Ainsi, on est assuré d'une parfaite liaison entre le câblage et la bague, liaison étanche.

A la figure 3, on a représenté en coupe une cloison 10 séparant le compartiment moteur de l'habitacle.

La cloison 10 est percée d'un trou 13 correspondant au diamètre de la gorge 2. Sur le bord du trou est monté un anneau en matière plastique 11 pourvu d'une gorge 12 pour s'emboîter sur le bord dudit trou 13.

Contre la face de la cloison 10, du côté moteur, est appliquée une épaisseur 17 d'une matière isolante ayant également des bonne qualités d'isolation acoustique. Cette épaisseur présentant une ouverture 15 correspondant au trou 13 et un décrochement 16 afin de s'emboîter sur l'anneau 11.

Pour mettre en place la bague sur la cloison 10, on replie la languette 3 (voir figure 3) puis après que celle-ci ait traversé l'anneau 11 et l'ouverture 15, on relâche la languette 3 qui vient s'appliquer contre l'épaisseur 17.

Bien entendu, l'invention n'est pas limitée au mode de réalisation qui vient d'être décrit et représenté. On pourra y apporter de nombreuses modifications de détail sans sortir pour cela du cadre de l'invention telle que définie par les revendications.

## Revendications

1. Bague de traversée de cloison destinée à être montée dans le trou (13) d'une cloison (10) séparant le compartiment moteur de l'habitacle d'un véhicule et constituée d'un corps (1) souple et élastique présentant une gorge (2) périphérique correspondant au diamètre du trou (13) de la cloison et délimitant deux languettes circulaires (3 et 4) destinées à coopérer avec les deux faces de ladite cloison (10), ledit corps (1) étant percé d'un canal central (5) traversé par un faisceau (7) de conducteurs (8), ladite bague étant **caractérisée en ce que** le canal (5) comporte une série de sections de différents diamètres et le faisceau (7) est noyé dans de la matière plastique remplissant le canal.

2. Bague de traversée de cloison, selon la revendication 1, **caractérisée en ce qu'**elle est complétée d'un anneau (11) monté sur le bord du trou (13) de la cloison (10).

3. Bague de traversée de cloison, selon la revendication 1, **caractérisée en ce qu'**elle est complétée d'une épaisseur de matière isolante (17) percée d'une ouverture (15) correspondant au trou (13) et appliquée contre la face de la cloison tournée du côté du compartiment moteur, ladite ouverture étant traversée par la bague (1) dont la languette circulaire correspondante (3) est appliquée contre la face libre de ladite épaisseur de matière isolante (17).

## Patentansprüche

1. Ring für eine Wanddurchführung, der dazu vorgesehen ist, in der Öffnung (13) einer Trennwand (10) angebracht zu werden, die den Motorraum vom Karosseriegehäuse eines Fahrzeuges trennt, und der aus einem weichen und elastischen Körper (1) besteht, der eine umfängliche Rille (2) aufweist, die dem Durchmesser der Öffnung (13) der Trennwand entspricht und zwei kreisrunde Zungen (3 und 4) begrenzt, die zur Zusammenwirkung mit den zwei Seiten der genannten Trennwand (10) vorgesehen sind, wobei genannter Körper (1) von einem zentralen Kanal (5) durchbrochen ist, der durch ein Bündel (7) von Leitern (8) durchzogen ist, wobei genannter Ring **dadurch gekennzeichnet ist, dass** der Kanal (5) eine Reihe von Abschnitten unterschiedlicher Durchmesser aufweist und das Bündel (7) in plastisches Material eingebettet ist, das den Kanal ausfüllt.

2. Ring für eine Wanddurchführung nach Anspruch 1, **dadurch gekennzeichnet, dass** er durch einen Reif (11) vervollständigt ist, der auf dem Rand der Öffnung (13) der Trennwand (10) angebracht ist.

3. Ring für eine Wanddurchführung nach Anspruch 1, **dadurch gekennzeichnet, dass** er durch eine Lage isolierenden Materials (17) vervollständigt ist, die durch eine Öffnung (15), die der Öffnung (13) entspricht, durchbrochen und an die Seite der Trennwand angelegt ist, die der Seite des Motorraumes zugewandt ist, wobei genannte Öffnung durch den Ring (1) durchgriffen ist, dessen entsprechende kreisrunde Zunge (3) an die freie Seite der genannten Lage aus isolierendem Material (17) angelegt ist.

## Claims

1. Sleeve for a wall opening designed to be mounted in the hole (13) of a wall (10) separating the motor compartment from the interior of a vehicle and consisting of a flexible and elastic body (1) with a peripheral groove (2) corresponding with the diameter of the hole (13) in the wall and delimiting two circular tongues (3 and 4) designed to cooperate with the two faces of said wall (10), said body (1) being cut through by a central channel (5) designed to receive a bundle (7) of conductors (8), said sleeve being **characterised in that** the channel (5) consists of a series of sections of varying diameters and the bundle (7) is embedded in the plastic material filling the channel.

2. Sleeve for a wall opening according to claim 1, **characterised in that** it is completed by a ring (11) mounted on the edge of the hole (13) in the wall (10).

3. Sleeve for a wall opening according to claim 1, **characterised in that** it is completed by a thick layer of insulating material (17) penetrated by an opening (15) corresponding to the hole (13) and applied against the face of the wall opposite the side of the motor compartment, the said opening receiving the sleeve (1), the corresponding circular tongue (3) of which bears against the free face of the said thick layer of insulating material (17).
